# EUROPEAN PATENT APPLICATION

(11) **EP 4 475 307 A1**
(43) Date of publication of application: **11.12.2024**
(21) Application number: 23898342.3
(22) Date of filing: 30.11.2023
(51) Int. Cl.: H01M 50/264, H01M 50/204, H01M 50/249

(54) **BATTERY PACK MODULE**

(30) Priority: 01.12.2022 KR 20220165326
(71) Applicant: LG Energy Solution, Ltd., Seoul 07335 (KR)
(72) Inventor: JEON, Byeong Jun, Daejeon 34122 (KR); SON, Young Su, Daejeon 34122 (KR)
(74) Representative: Plasseraud IP
(86) International application number: PCT/KR2023/019576
(87) International publication number: WO 2024/117818

(57) **Abstract**

A battery pack module related to one example of the present invention comprises a first battery pack including a plurality of first fitting parts, a second battery pack including a plurality of second fitting parts and disposed to be adjacent to the first battery pack, and a plurality of fixing members coupled together to the first and second fitting parts to connect the first and second battery packs, wherein each fixing member comprises two first pins, in which some regions are fixed to the first fitting parts of the first battery pack and other regions are each fit-coupled to the second fitting parts of the second battery pack, and a second pin connecting the two first pins.

## Description

### Technical Field

The present invention relates to a battery pack module, and an electric transportation means on which the battery pack module is mounted.

This application claims the benefit of priority based on Korean Patent Application No. 10-2022-0165326 dated December 1, 2022, the disclosure of which is incorporated herein by reference in its entirety.

### Background Art

In general, battery packs can be used as an uninterruptible power-supply system (UPS) that supplies facilities or equipment with the electric power source charged to the battery when problems such as emergency power supply in buildings and power outages at industrial sites occur or when enjoying leisure life such as camping.

For example, the above-described battery pack has a structure in which several unit modules packaging unit cells as rechargeable secondary batteries with a case are sequentially arranged (stacked), and these unit modules are electrically connected.

Here, the above-described unit modules are electrically connected through a bar-shaped bus bar, where the unit modules are electrically connected while the bus bar is coupled to the bus plate (terminal) provided in the unit battery through bolts, and the like.

That is, the unit modules can be electrically connected by drilling holes for fastening bolts to the bus plate of the unit battery and coupling the bus bar and bus plate with bolts through the drilled holes.

Meanwhile, Korean Patent No. 10-1234235 discloses a battery pack in which a plurality of battery modules is stacked.

However, the disclosed battery pack requires many parts, such as an upper frame, a lower frame, a side support, and an end plate, to support several unit cells when manufacturing a battery module, whereby which there is a problem that the structure of the battery pack becomes complicated.

### Disclosure

### Technical Problem

The problem to be solved by the present invention is to provide a battery pack module capable of minimizing the distance between adjacent battery packs and preventing twisting or loosening of the battery pack.

### Technical Solution

To solve the above problem, the battery pack module related to one example of the present invention comprises a first battery pack including a plurality of first fitting parts, a second battery pack including a plurality of second fitting parts and disposed to be adjacent to the first battery pack, and a plurality of fixing members coupled together to the first and second fitting parts to connect the first and second battery packs.

Also, each fixing member comprises two first pins, in which some regions are fixed to the first fitting parts of the first battery pack and other regions are each fit-coupled to the second fitting parts of the second battery pack, and a second pin connecting the two first pins.

In addition, the plurality of first and second fitting parts may be formed at the end of the first battery pack and the end of the second battery pack, respectively, where the first battery pack and the second battery pack face each other.

Furthermore, the fixing member may connect the first and second battery packs through four fixing regions fit-coupled with the two first fitting parts of the first battery pack and the two second fitting parts of the second battery pack.

The first pins may be disposed along the longitudinal direction of the first battery pack, and the second pin may be disposed to be orthogonal to the first pin.

Also, the first pin may comprise a body having a first width and fit-coupled with the first and second fitting parts, respectively, and an end portion having a second width greater than the first width and formed at both ends of the body.

In addition, the two first pins in the fixing member are disposed to be spaced apart at a predetermined distance, where the distance may be in a range of 1.0 to 5mm.

Furthermore, the length of the first pin may be in a range of 5 to 10mm.

Also, the first and second fitting parts may each be a semi-annular fitting part having an opening portion for inserting the first pin. In addition, the first and second fitting parts may each be provided so that upon inserting the first pin, the size of the opening portion is adjustable by an external force.

Furthermore, in the fixing member, the two first fitting parts nay be fit-coupled with the upper ends of the two first pins, respectively, and the two second fitting parts may be fit-coupled with the lower ends of the two first pins fit-coupled with the first fitting parts, respectively.

Also, at least one of the first and second battery packs may comprise one or a plurality of third fitting parts which are fit-coupled with the second pin of the fixing member.

In addition, at least one of the plurality of third fitting parts may be provided in the first battery pack, and at least one may be provided in the second battery pack.

Furthermore, each third fitting part may be a semi-annular fitting part having an opening portion for inserting the second pin, and each third fitting part may be provided so that upon inserting the second pin, the size of the opening portion is adjustable by an external force.

Also, the fixing member may connect the first and second battery packs through five fixing regions which are fit-coupled with two first fitting parts of the first battery pack, two second fitting parts of the second battery pack, and one third fitting part, respectively.

In addition, the fixing member may comprise a polycarbonate injection product.

Furthermore, the electric transportation means related to one example of the present invention may comprise the battery pack module. The electric transportation means is mounted with the battery pack module to supply a power source to a motor, which is a driving source.

### Advantageous Effects

As discussed above, according to the battery pack module related to at least one example of the present invention, through the fixing member fixed to each battery pack to connect two adjacent battery packs, it is possible to minimize the distance between adjacent battery packs, and it is possible to prevents twisting or loosening of the battery pack.

### Description of Drawings

Figure 1 is a diagram schematically showing a battery pack module related to one example of the present invention.
Figure 2 is a diagram showing a fixing member.
Figure 3(a) is a cross-sectional diagram in a state cut along a line B-B of Figure 2, and Figure 3(b) is a cross-sectional diagram in a state cut along a line C-C of Figure 2.
Figure 4 is a diagram showing a first fitting part.
Figure 5 is a diagram showing a state where a fixing member is fit-coupled.
Figure 6 is a diagram showing formation positions of first and second fitting parts in first and second battery packs.
Figure 7 is a diagram showing a third fitting part.
Figure 8 is a configuration diagram schematically showing an electric transportation means related to one example of the present invention.

### Mode for Invention

Hereinafter, a battery pack module according to one example of the present invention, and an electric transportation means mounted with the battery pack module will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

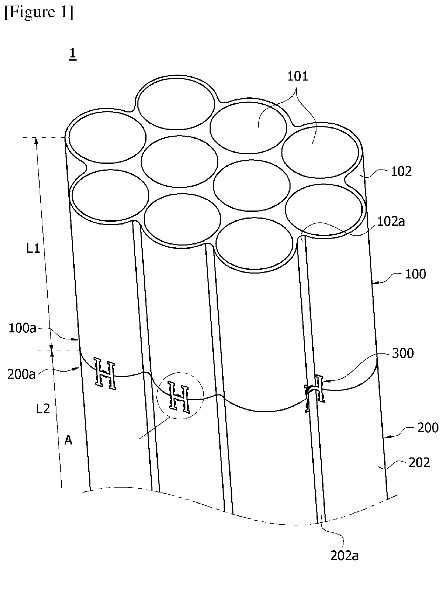

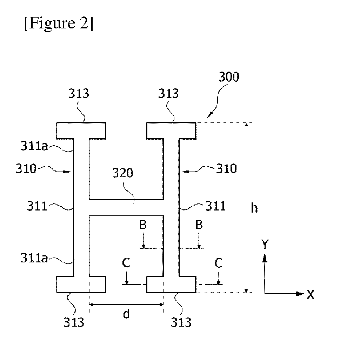

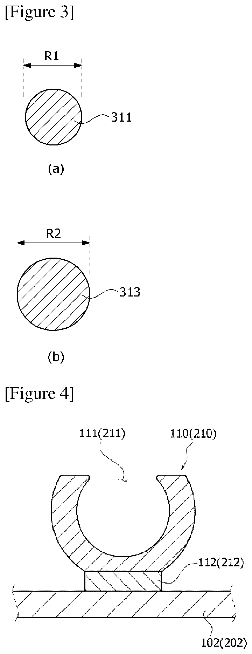

Figure 1 is a diagram schematically showing a battery pack module (1) related to one example of the present invention, Figure 2 is a diagram showing a fixing member (300), and Figure 3(a) is a cross-sectional diagram in a state cut along a line B-B of Figure 2, and Figure 3(b) is a cross-sectional diagram in a state cut along a line C-C of Figure 2.

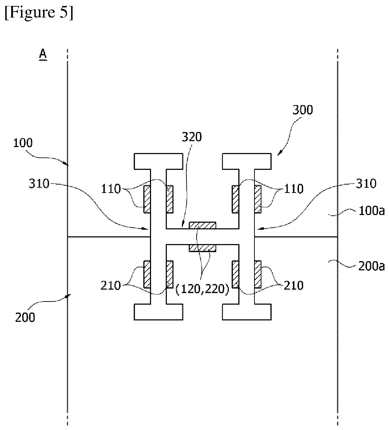

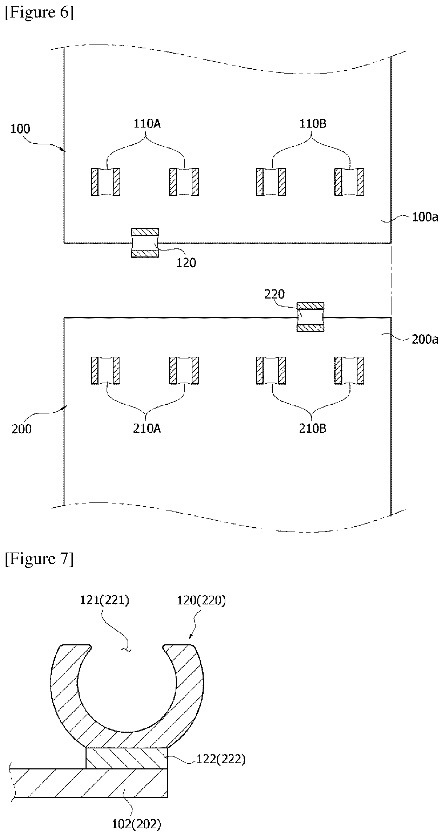

In addition, Figure 4 is a diagram showing a first fitting part (110), Figure 5 is a diagram showing a state where a fixing member (300) is fit-coupled, which is a detailed view of a portion A of Figure 1, and Figure 6 is a diagram showing formation positions of first and second fitting parts in first and second battery packs.

The battery pack module (1) related to one example of the present invention comprises a plurality of battery packs (100, 200) and a plurality of fixing members (300) connecting two adjacent battery packs (100, 200). In addition, the plurality of battery packs (100, 200) may have the same structure. As one example, the battery pack module (1) comprises a first battery pack (100), a second battery pack (200), and a plurality of fixing members (300).

The first battery pack (100) comprises a plurality of first fitting parts (110). The first battery pack (100) may comprise accommodation spaces (101) accommodating battery cells, and a case (102) surrounding the accommodation spaces (101).

A plurality of accommodation spaces (101) may be provided within the case (102), and battery cells may be accommodated in each accommodation space (101). The battery cell may be a cylindrical battery cell or a rectangular battery cell. The first battery pack (100) may comprise a plurality of battery cells, and a case (102) having a plurality of accommodation spaces (101) accommodating the respective battery cells. Also, the case (102) may have a shape extending along the longitudinal direction (L1), and the respective battery cells may be inserted into the accommodation spaces (101) along the longitudinal direction (L1) of the case (102).

In addition, the plurality of first fitting parts (110) may be provided on the outer surface of the case (102). For example, the plurality of first fitting parts (110) may be formed to protrude to the outside of the case (102).

The case (102) may have a shape in which a boundary region (102a) of two adjacent accommodation spaces (101) is concavely depressed inward. Particularly, when the plurality of first fitting parts (110) is positioned in the concavely formed portion, it is possible to increase utilization properties of the external space of the case (102), and it is possible to expect the effect of preventing the fixing member (300) from being separated.

The second battery pack (200) comprises a plurality of second fitting parts (210). The second fitting part (210) has the same structure as the first fitting part (110). In this document, for convenience of explanation, the fitting part formed in the first battery pack (100) is referred to as the first fitting part (110), and the fitting part formed in the second battery pack (200) is referred to as the second fitting part (210).

The second battery pack (200) may comprise accommodation spaces (not shown) accommodating battery cells, and a case (202) surrounding the accommodation spaces. As such, the second battery pack (200) may have the same structure as the first battery pack (100) and may be provided with a case (202) having a plurality of accommodation spaces.

A plurality of accommodation spaces may be provided within the case (202), and the battery cells may be accommodated in the respective accommodation spaces. The battery cell may be a cylindrical battery cell or a rectangular battery cell. The second battery pack (200) may comprise a plurality of battery cells, and a case (202) having a plurality of accommodation spaces accommodating the respective battery cells. Also, the case (202) may have a shape extending along the longitudinal direction (L2), and the respective battery cells may be inserted into the accommodation spaces along the longitudinal direction (L2) of the case (202).

In addition, the plurality of second fitting parts (210) may be provided on the outer surface of the case (202). As one example, the plurality of second fitting parts (210) may be formed to protrude to the outside of the case (202).

The case (202) may have a shape in which a boundary region (202a) of two adjacent accommodation spaces is concavely depressed inward. Particularly, when the plurality of second fitting parts (210) is positioned in the concavely formed portion, it is possible to increase utilization properties of the external space of the case (202), and it is possible to expect the effect of preventing the fixing member (300) from being separated.

In addition, the second battery pack (200) is disposed to be adjacent to the first battery pack (100). The second battery pack (200) may be disposed in series with the first battery pack (100). The serial disposal means that the first and second battery packs (200) are disposed in line to be adjacent to each other along the longitudinal direction (L1, L2). Referring to Figure 1, the lower end (100a) of the first battery pack (100) and the upper end (200a) of the second battery pack (200) are disposed to be adjacent to each other along the longitudinal directions (L1, L2), where the lower end (100a) of the first battery pack (100) and the upper end (200a) of the second battery pack (100, 200) may also have at least some regions in direct contact with each other, or may also be disposed to be spaced apart below a predetermined distance.

For example, in the serial disposal, referring to a part A of Figure 1, the lower end (100a) of the first battery pack (100) and the upper end (200a) of the second battery packs (100, 200) may be connected by a plurality of fixing members (300). Also, the first fitting parts (not shown) formed at the upper end of the first battery pack (100) may be parts for connecting to a third battery pack (not shown) disposed in series with the upper end of the first battery pack (100). In addition, the second fitting parts (not shown) formed at the lower end of the second battery pack (200) may be parts for connecting to a fourth battery pack (not shown) disposed in series with the lower end of the second battery pack (200).

That is, the battery pack module (1) has a structure in which a plurality of battery packs (100, 200) may be disposed in series, and two adjacent battery packs may be connected and fixed through a plurality of fixing members (300).

The respective fixing members (300) are coupled together to the first and second fitting parts (110, 210) to connect the first and second battery packs (100, 200).

Referring to Figures 2 and 5, each fixing member (300) comprises a plurality of first pins (310) in which some regions are inserted and fixed into the first fitting parts (110) of the first battery pack (100), and other regions are inserted into the second fitting parts (210) of the second battery pack (200), and a second pin (320) connecting two adjacent first pins (310).

The fixing member (300) may be an H-type fixing member having an "H" shape in which two first pins (310) and one second pin (320) are integrally connected. The H-type fixing member (300) has a structure in which two first pins (310) are disposed to be spaced apart at a predetermined distance (d), and a second pin (320) connects the two first pins (310) at the distance.

In this specification, the battery pack module (1) comprises a plurality of battery packs (100, 200) coupled via the fixing member (300), and each battery pack (100, 200) comprises a case, and battery cells disposed inside the case. In Figure 1, the battery pack module (1) shows a structure in which two battery packs (100, 200) are combined, but may comprise a structure in which three or more battery packs are connected. The fixing member (300) plays a role in connecting and fixing two adjacent battery packs therebetween.

As the first and second battery packs (100, 200) are connected and fixed by the fixing member (300) having the special structure, thee battery pack module according to the present application can have the effect of improving the connection strength between battery packs, minimizing the distance between battery packs, and preventing twisting or loosening of the battery pack.

In one example, the plurality of first and second fitting parts (110, 210) may be formed at the end (100a) of the first battery pack and the end (200a) of the second battery pack, respectively, where the first battery pack (100) and the second battery pack (200) face to be adjacent to each other. In addition, when there are three or more battery packs to be connected, the plurality of fitting parts may be formed at edges of both ends of the battery packs.

The plurality of first fitting parts (110) may be disposed to be spaced apart along the edges of the upper end and the lower end (100a) of the first battery pack (100), and the second fitting parts (210) may be disposed to be spaced apart along the edges of the upper end (200a) and the lower end of the second battery pack (200).

Specifically, referring to Figures 1 and 5, in a state where the first battery pack (100) is disposed in series with the second battery pack (200) so that the lower end (100a) of the first battery pack (100) and the upper end (200a) of the second battery pack (200) face each other, the two first fitting parts (110) of the first battery pack (100) and the two second fitting parts (210) of the second battery pack (200) form one set of fixing regions, and such fixing regions are disposed to be spaced apart along the circumferential direction of each battery pack in a set unit, where one fixing member (300) may be fit-coupled to one set.

In one specific example, the fixing member (300) may connect the first and second battery packs (100, 200) through four fixing regions which are fit-coupled with the two first fitting parts (110) of the first battery pack (100) and the two second fitting parts (210) of the second battery pack (200). As the fixing member (300) has four fixing regions, it exhibits effects of improving the connection strength between battery packs, minimizing the battery pack distance, and preventing twisting or loosening of the battery pack.

Referring to Figures 1 and 2, specifically, the first pins (310) may be disposed along the longitudinal direction (L1, y-axis direction) of the first battery pack (100), and the second pin (320) may be disposed to be orthogonal to the first pin (310) (x-axis direction). The first pins (310) and the second pin (320) may be manufactured by injection to be integrally connected. Both ends of the second pin (320) may be connected to the center portion of the two first pins (310). In addition, the pair of first pins (310) may have a symmetrical shape based on the second pin (320).

Referring to Figures 2, 3, and 4, the first pin (310) may comprise a body (311) having a first width (R1, also referred to as 'diameter') and fit-coupled with the first and second fitting parts (110, 210), respectively, and end portions (313) having a second width (R2, also referred to as 'diameter') larger than the first width (R1) and formed at both ends of the body (311).

In the first pin (310), the end portion (313) may have a width wider than that of the body (311), and as one example, the body (311) and the end portion (313) may have a 'I' shape. The end portion (313) of the first pin (320) serves to prevent the fit-coupled body from being separated.

In addition, the body (311) may have a shape extending along the longitudinal direction (L1) of the first battery pack (100), and the end portion (313) may have a shape extending along a direction orthogonal to the body (311).

The body (311) and the end portion (3113) of the first pin (310) may each be a member having a circular or polygonal cross-section. Particularly, when they have a circular cross-section, the first width (R1) may be a first diameter, and the second width (R2) may be a second diameter.

Referring to Figure 4, the present invention may be provided with a first connecting member (112) connecting the first fitting part (110) and the case (102) so that the first fitting part (110) is positioned to be spaced apart at a predetermined distance from the outer surface of the case (102) of the first battery pack (100). The first connection member (112) may prevent the end portion (313) and the case (102) of the first battery pack (100) from contacting each other in the fit-coupled state of the first pin (310).

In addition, referring to Figure 4, the present invention may be provided with a second connecting member (212) connecting the second fitting part (210) and the case (102) so that the second fitting part (210) is positioned to be spaced apart at a predetermined distance from the outer surface of the case (202) of the second battery pack (200). The second connecting member (212) may prevent the end portion (313) and the case (202) of the second battery pack (200) from contacting each other in the fit-coupled state of the first pin (310).

In the fixing member (300), the two first pins (310) may be disposed to be spaced apart at a predetermined distance (d), and the distance (d) may be in a range of 1.0 to 5mm. As the distance (d) between the two first pins (310) satisfies the above range, it exhibits the effects of improving the connection strength between battery packs, minimizing the battery pack distance, and preventing twisting or loosening of the battery pack.

In addition, the length (h) of the first pin (310) may be in a range of 5 to 10mm. As the length (h) of the first pin (310) satisfies the above range, it may exhibit the effects of improving the connection strength between battery packs, minimizing the battery pack distance, and preventing twisting or loosening of the battery pack.

In one example, the first and second fitting parts (110, 210) are semi-annular fitting parts having opening portions (111, 211) for inserting the first pins (310), respectively, which may be provided so that upon insertion of the first pins (310), the size of the opening portions (111, 211) is adjustable by an external force. That is, the opening portions (111, 211) of the first and second fitting parts (110, 210) may be exposed to the direction opposite to the direction facing the outer surface of the battery pack (100, 200) to facilitate fit-coupling of the first pins (310).

Referring to Figures 2 and 5, in one example, the two first fitting parts (110) may be fit-coupled with the upper ends of the two first pins (310), respectively, and the two second fitting parts (210) may be fit-coupled with the lower ends of the two first pins (310) fit-coupled with the first fitting parts (110), respectively.

Figure 7 is a diagram showing third fitting parts (120, 220).

Referring to Figures 5 to 7, at least one of the first and second battery packs (100, 200) may comprise one or more third fitting parts (120, 220) fit-coupled with the second pin (320) of the fixing member (300). For example, the third fitting parts (120, 220) may be equipped with a plurality of parts which is at least two or more. The plurality of third fitting parts (120, 220) may be provided to be capable of fit-coupling with the second pin (320), and the plurality of third fitting parts (120, 220) may be coupled to both ends of the first and second battery packs (100, 200), respectively, along a direction orthogonal to the longitudinal directions (L1, L2) of the first and second battery packs (100, 200).

The third fitting parts (120, 220) are semi-annular fitting parts having opening portions (121, 221) for inserting the second pin (320), which may be provided so that upon insertion of the second pin (320), the size of the opening portions (121, 221) is adjustable by an external force. That is, the opening portions (121, 221) of the third fitting parts (120, 220) may be exposed to the direction opposite to the direction facing the outer surface of the battery pack (100, 200) to facilitate fit-coupling of the second pin (320).

Referring to Figure 7, the third fitting part (120, 220) may be provided with a second connecting member (122, 222) connecting the third fitting part (120, 220) and the case (102, 202) to be positioned apart from the case (102, 202) of each battery pack (100, 200). The second connecting member (122, 222) may prevent the second pin (310) from contacting the case (102, 202) of each battery pack (100, 200) in the fit-coupled state.

Among the plurality of third fitting parts (120, 220), at least one may be provided in the first battery pack (100), and at least one may be provided in the second battery pack (200).

Among the plurality of third fitting parts (120, 220), two adjacent third fitting parts (120, 220) may be disposed to alternate with each other along the circumferential direction of the battery module (1), and for example, the two adjacent third fitting parts (120, 220) may be provided in different battery packs, respectively, where one third fitting part (120) of the two adjacent third fitting parts (120, 220) may be provided in the first battery pack (100), and the other third fitting part (220) may be provided in the second battery pack (200). That is, another third fitting part (220) adjacent to the third fitting part (120) formed in the first battery pack (100) may be formed in the second battery pack (200).

Referring to Figure 6, in a state where the second battery pack (200) and the first battery pack (100) are disposed in series so that the lower end (100a) of the first battery pack (100) and the upper end (200a) of the second battery pack (200) face each other, when a plurality of fixing members is fastened, one fixing member may be fit-coupled with two first fitting parts (110A) of the first battery pack (100), one third fitting part (120) of the first battery pack (100), and two second fitting parts (210B) of the second battery pack (200); and the other fixing member may be fit-coupled with two first fitting parts (210B) of the first battery pack (100), one third fitting part (220) of the second battery pack (200), and two second fitting parts (210B) of the second battery pack (200).

As described above, the two adjacent third fitting parts (120, 220) are provided to be alternately disposed in the first battery pack (100) and the second battery pack (200), respectively, so that it may exhibit the effects of improving the connection strength between battery packs, minimizing the battery pack distance, and preventing twisting or loosening of the battery pack.

In one specific example, the fixing member (300) may connect the first and second battery packs (100, 200) through five fixing regions fit-coupled with two first fitting parts (110) of the first battery pack (100), two second fitting parts (210) of the second battery pack (200), and one third fitting part (120, 220) of the first battery pack (100) or the second battery pack (200), respectively. In this way, the fixing member (300) connecting the first and second battery packs (100, 200) through five fixing regions may exhibit the effects of improving the connection strength between the battery packs, minimizing the battery pack distance, and preventing twisting or loosening of the battery pack.

In one example, the fixing member (300) may be one manufactured by injection. The fixing member (300) may be a polycarbonate injection product. As the fixing member (300) is made of the polycarbonate injection product, it may exhibit the effects of improving the connection strength between battery packs, minimizing the battery pack distance, and preventing twisting or loosening of the battery pack.

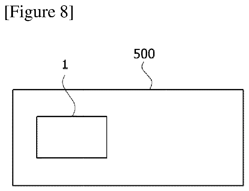

Figure 8 is a configuration diagram schematically showing an electric transportation means (500) related to one example of the present invention.

The present application also relates to an electric transportation means (500). The electric transportation means (500) is mounted with the above-described battery pack module (1), and the type is not greatly limited, which may include, for example, electric vehicles, scooters, electric bicycles, and the like.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery pack module related to at least one example of the present invention, through the fixing member fixed to each battery pack to connect two adjacent battery packs, it is possible to minimize the distance between adjacent battery packs, and it is possible to prevent twisting or loosening of the battery pack.

## Claims

1. A first battery pack module comprising:
a first battery pack including a plurality of first fitting parts;
a second battery pack including a plurality of second fitting parts and disposed to be adjacent to the first battery pack; and
a plurality of fixing members coupled together to the first and second fitting parts to connect the first and second battery packs, wherein
each fixing member comprises two first pins, in which some regions are fixed to the first fitting parts of the first battery pack and other regions are each fit-coupled to the second fitting parts of the second battery pack, and a second pin connecting the two first pins.

2. The battery pack module according to claim 1, wherein
the plurality of first and second fitting parts is formed at the end of the first battery pack and the end of the second battery pack, respectively, where the first battery pack and the second battery pack face each other.

3. The battery pack module according to claim 1, wherein
the fixing member connects the first and second battery packs through four fixing regions fit-coupled with the two first fitting parts of the first battery pack and the two second fitting parts of the second battery pack.

4. The battery pack module according to claim 1, wherein
the first pins are disposed along the longitudinal direction of the first battery pack, and the second pin is disposed to be orthogonal to the first pin.

5. The battery pack module according to claim 1, wherein
the first pin comprises: a body having a first width and fit-coupled with the first and second fitting parts, respectively; and
an end portion having a second width greater than the first width and formed at both ends of the body.

6. The battery pack module according to claim 1, wherein
the two first pins are disposed to be spaced apart at a predetermined distance, where the distance is in a range of 1.0 to 5mm.

7. The battery pack module according to claim 1, wherein
the length of the first pin is in a range of 5 to 10mm.

8. The battery pack module according to claim 1, wherein
the first and second fitting parts are semi-annular fitting parts having opening portions for inserting the first pins, and
are provided so that upon inserting the first pins, the size of the opening portion is adjustable by an external force.

9. The battery pack module according to claim 1, wherein
the two first fitting parts are fit-coupled with the upper ends of the two first pins, respectively, and
the two second fitting parts are fit-coupled with the lower ends of the two first pins fit-coupled with the first fitting parts, respectively.

10. The battery pack module according to claim 1, wherein
at least one of the first and second battery packs comprises one or more third fitting parts which are fit-coupled with the second pin of the fixing member.

11. The battery pack module according to claim 10, wherein
at least one of the plurality of third fitting parts is provided in the first battery pack, and at least one is provided in the second battery pack.

12. The battery pack module according to claim 10, wherein
the third fitting part is a semi-annular fitting part having an opening portion for inserting the second pin, and
is provided so that upon inserting the second pin, the size of the opening portion is adjustable by an external force.

13. The battery pack module according to claim 10, wherein
the fixing member connects the first and second battery packs through five fixing regions which are fit-coupled with two first fitting parts of the first battery pack, two second fitting parts of the second battery pack, and one third fitting part, respectively.

14. The battery pack module according to claim 1, wherein
the fixing member comprises a polycarbonate injection product.

15. An electric transportation means on which the battery pack module according to claim 1 is mounted.
